Europäisches Patentamt

**European Patent Office**

Office européen des brevets

(11) Publication number: **0 155 066**
**B1**

## EUROPEAN PATENT SPECIFICATION

(45) Date of publication of patent specification: **11.01.89**

(51) Int. Cl.⁴: **B 01 J 3/06**

(21) Application number: **85300287.1**

(22) Date of filing: **16.01.85**

(54) **Hard diamond sintered body.**

(30) Priority: **18.01.84 JP 7737/84**
**05.07.84 JP 140119/84**
**05.07.84 JP 140120/84**
**25.07.84 JP 155940/84**
**25.10.84 JP 224496/84**

(43) Date of publication of application:
**18.09.85 Bulletin 85/38**

(45) Publication of the grant of the patent:
**11.01.89 Bulletin 89/02**

(84) Designated Contracting States:
**BE DE FR GB NL SE**

(56) References cited:
**EP-A-0 014 589**
**EP-A-0 064 043**
**US-A-2 947 609**
**US-A-3 148 161**
**US-A-3 819 814**
**US-A-4 082 185**
**US-A-4 268 276**
**US-A-4 333 986**
**US-A-4 340 576**
**US-A-4 412 980**
**US-A-4 425 315**

(73) Proprietor: **SUMITOMO ELECTRIC INDUSTRIES
LIMITED**
**No. 15, Kitahama 5-chome Higashi-ku**
**Osaka-shi Osaka 541 (JP)**

(72) Inventor: **Yazu, Shuji c/o Itami Works of
Sumitomo Electric Industries Limited
1-1,Koyakita 1-chome Itami-chi Hyogo (JP)**
Inventor: **Nakamura, Tsutomu c/o Itami Works
of Sumitomo
Electric Industries Limited
1-1, Koyakita 1-chome Itami-shi Hyogo (JP)**

(74) Representative: **Bankes, Stephen Charles Digby
et al
BARON & WARREN 18 South End Kensington
London W8 5BU (GB)**

**Description**

The present invention relates to a hard diamond sintered body for use in tools such as cutting tools, excavating tools and wire drawing dies, and to a method for producing the same.

A sintered body obtained by sintering fine diamond powders at a superhigh pressure has already been widely used for example in cutting tools, drilling bits and wire drawing dies for nonferrous metals and the like.

According to JP—A—52—12126 (1977) such a sintered body is obtained by sintering diamond powders, which are disposed so as to contact with a molded body or a sintered body of WC—Co type carbide alloy, at the temperature at which a liquid phase of carbide alloy is produced, which temperature is higher if a superhigh pressure is used. At this time, a part of the Co contained in the carbide alloy infiltrates into a layer of diamond powders to act as a bonding metal. A sintered body obtained according to this method comprises Co therein at a ratio of about 10 to 15% by volume.

Since a sintered body containing Co at a ratio of about 10 to 15% by volume produced by the above described method is electrically conductive, it is comparatively easy to work by means of electric discharge machining, and therefore, it is adequate for practical use as a cutting tool for nonferrous metals and the like.

However, on the other hand, this sintered body has the defect of being inferior in heat-resistance. For example, if this sintered body is heated to temperatures of 750°C or above, its abrasion-resistance and strength are reduced and it is destroyed at temperatures of 900°C or above.

One reason for the above appears to be that diamond is graphitized on the grain boundary between the diamond powder and Co, which is a bonding material, and that thermal stress is generated by the difference in thermal expansion coefficient between diamond powders and Co.

Furthermore, it is known that the heat-resistance of a sintered body containing Co as a bonding material can be improved by treating it with acid to remove most of the bonding metal phase.

For example, JP—A—53—114589 (1978) discloses a method for producing a diamond sintered body of improved heat-resistance. However, since voids are formed at the places, from which the bonding metal phase has been removed, the strength of the diamond sintered body is inevitably reduced.

In addition, since a reduction in electrical conductivity of a diamond sintered body occurs with the removal therefrom of Co, which is a bonding material, this diamond sintered body has the disadvantage that an electric discharge machining can not be applied thereto.

On the other hand, although it has been tried also to sinter diamond powders along under a superhigh pressure, since diamond powders are difficult to deform, the pressure can not be transmitted to the gaps between particles and the graphitization thereof takes place, whereby only a diamond-graphite composite is obtained.

The present invention relates to a hard diamond sintered body improved in heat-resistance, the lack of which has been a defect of the conventional diamond sintered bodies, and to a method for producing it. The invention relates in particular to a hard diamond sintered body in which heat-resistance is improved without reducing the electrical conductivity of the conventional diamond sintered body.

According to a first aspect of the invention there is provided a hard diamond sintered body comprising mutually bonded diamond particles, at least one diamond synthesizing catalyst metal $M_A$ selected from Fe, Co, Ni, Cr, Mn and Ta or an alloy thereof being incorporated within said particles in an amount of 0.01 to 10 wt.% based on the particles, and an intermetallic compound in the grain boundary between said particles, the intermetallic compound containing at least one said metal $M_A$ and a different metal which may be another Metal $M_A$ or a Metal $M_B$ selected from Ti, Zr, Hf, V, Nb, Mo, W, Cr and Ta, and being present in an amount of 0.01 to 12 wt.% based on the sintered body, the sintered body being made by:

wholly or partly graphitizing a synthetic diamond powder containing said metal $M_A$ and

sintering the graphitized powder thus produced at a temperature and pressure at which diamond is stable, optionally in the presence of the metal $M_B$.

According to a further aspect of the invention there is provided a conductive hard diamond sintered body comprising mutually bonded diamond particles, at least one diamond-synthesizing catalyst metal $M_A$ selected from Fe, Co, Ni, Cr, Mn and Ta or an alloy thereof being incorporated within said particles in an amount of 0.01 to 3.0 wt.% based on the particles and boron being incorporated within said particles in an amount of 0.001 to 1.0 wt.% based on the particles, and an intermetallic compound in the grain boundary between said particles, the intermetallic compound containing at least one said metal $M_A$, boron or an alloy thereof and a different metal which may be another metal $M_A$ or a metal $M_B$ selected from Ti, Zr, Hf, V, Nb, Mo, W, Cr and Ta, and being present in an amount of 0.01 to 12 wt.% based on the sintered body, the sintered body having a specific resistance of 0.1 to $10^3$ ohm.cm. and being made by:

wholly or partly graphitizing a synthetic diamond powder containing a metal $M_A$ and boron and

sintering the graphitized powder thus produced at a superhigh pressure and elevated temperature at which diamond is stable optionally in the presence of a metal $M_B$.

The sintering may be carried out in a reaction vessel consisting of one or more of the said metals $M_B$, and is usually carried out at a superhigh pressure of 50 kb ($5.10^9$ Pa) or more and high temperature of 1,400°C or more to provide conditions under which diamond is stable.

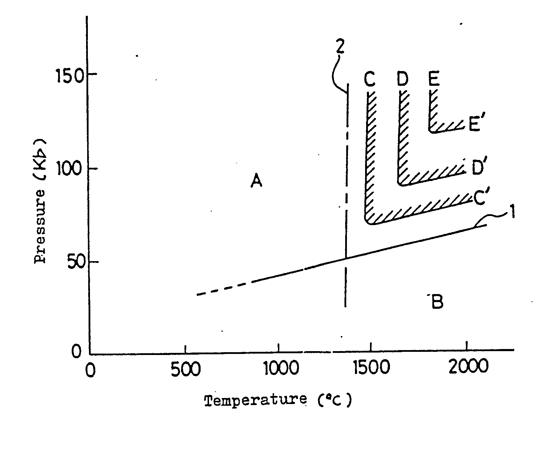

The accompanying drawing is a graph showing the relationship between temperature and pressure in

2

the graphitizing process of raw materials and the sintering process of diamond powders in one embodiment of the present invention, wherein at least one of Fe, Co, Ni, Cr, Mn, Ta in an amount of 0.01—3 wt.% and B in an amount of 0.01 to 1 wt.% is included. In the graph, 1 shows a graphite diamond equilibrium line; 2 shows a catalyst metal-carbon eutectic line; A shows a region in which diamond is stable; B shows a region in which graphite is stable; C—C' shows a region of temperatures and pressures in which raw materials having a degree of graphitization of 10% can be sintered; D—D' shows a region of temperatures and pressures in which raw materials having a degree of graphitization of 40% can be sintered; and E—E' shows a region of temperatures and pressures in which raw materials having a degree of graphitization of 70% can be sintered.

The VIII iron group metals of the periodic table of Cr, Mn and Ta or alloys thereof, used as catalysts in the synthesis of diamond are generally present as impurities in the diamond powder used as the raw material.

In addition, synthetic diamond powders grow, depending upon the growing conditions incorporating a catalysis metal, which is used in the synthesis thereof, in a specified plane or orientation inside the crystals.

The present inventors have selected synthetic diamond powders containing a specified quantity of such components and graphitized all or part of diamond by heating prior to sintering. The graphitized powders can be put into a reactive vessel made of at least one metal selected from Ti, Zr, Hf, V, Nb, Ta, Cr, Mo, W and sintered at a superhigh pressure and high temperature, under which diamond is stable, while preventing said metals or alloys thereof from infiltrating thereinto from outside the system, e.g. with the use of iron group materials and Cr, Mn and Ta in the raw material.

As a result, it was found that where synthetic diamond powders including metallic impurities therein at a ratio of 0.01 to 10% by weight were used as the starting raw materials, graphitized diamond was converted to diamond again in the sintering process, whereby a compact sintered body was obtained.

In addition, it was found that where synthetic diamond powders including the said catalysis metal impurities at a ratio of 0.01 to 3.0% by weight and boron, which was added at a ratio of 0.001 to 1.0% by weight, to form solid solutions, were used as the starting raw materials, the resulting diamond sintered body had an electrical conductivity almost equivalent to that of the conventional diamond sintered body including Co as a bonding material, being remarkably compact and strong, and being remarkably improved in heat-resistance in comparison with the conventional diamond sintered body.

For comparison, catalysis metal powders were added to synthetic diamond powders, which contained impurities at a comparatively small ratio, less than 0.01% by weight, and in which all or part of the diamond was graphitized by heating, and the resulting mixture was sintered. In this case, it was found that a sufficiently compact sintered body could not be obtained and some graphite remained. According to this method, similar results were obtained even if natural diamond was used as a raw material.

One reason for the above seems to be that a small amount of catalysis metal is very difficult to mix uniformly with diamond powders and diamond powders can be firmly bonded to each other at the places where catalysis metals exist but graphite remains without being converted to diamond at the places where catalysis metals do not reach.

In addition, it can be inferred by the analogy with the above that catalysis metals incorporated in diamond in the synthesis thereof act in the sintering process differently from those added subsequently.

Furthermore, according to the above described method, since boron exists on the grain boundary of diamond without being diffused to the inside of the diamond powders when synthetic diamond powders containing a diamond synthesizing catalysis at a ratio of 0.01 to 3.0% by weight and boron at a ratio of 0.001 to 1.0% by weight were used as raw materials, it was substantially impossible to apply an electric discharge machining to a sintered body consisting of larger diamond particles having diameters of 100 microns ($\mu$m) or more.

As described above, it was supposed that the sufficient improvement in heat-resistance would not be obtained for a hard diamond sintered body according to the present invention, in particular when comprising catalysis metals therein. It was, however, found from the experimental results that a hard diamond sintered body according to the present invention could be remarkably improved in heat-resistance in comparison with the conventional diamond sintered body, being resistant even to heating at 1,000°C. The main reason for this seems to be that the content of metals in a hard diamond sintered body according to the present invention is less than that in a sintered body obtained by the conventional method in which diamond powders are impregnated with Co. A further reason seems to be that the metals differ in their distribution and characteristics.

That is to say, it seems that catalysis metals, which are incorporated into the diamond in the synthesis thereof, act in the sintering process differently from those added thereto subsequently.

It has been observed that in a hard diamond sintered body according to the present invention, crystalline particles are very closely joined to each other and most of the catalysis metal exists in the inside of said crystalline particles rather than on the grain boundary of said crystalline particles in the form of spheroidal or plate-like sediment.

On the other hand, in the conventional sintered body, catalysis metals exist on the boundary surface of diamond particles in the form of thin film.

One reason for this is that Co, which infiltrates into the gaps between diamond particles in the sintering process, acts as a bonding phase.

3

Also in a hard diamond sintered body according to a preferred embodiment of the present invention, a small amount of thin film-like metal exist on the grain boundary of diamond but it is an intermetallic compound formed by the action of one or more of the metals composing the reaction vessel and selected from Ti, Zr, Hf, V, Nb, Ta, Cr, Mo, W and the like which are diffused in raw materials in the sintering process, upon catalysis metals which are not contained in diamond particles but which remain on the grain boundary of said diamond particles.

As a result, it seems that since most of the catalysis metals are dispersed in diamond particles in a sintered body according to the present invention, graphitization does not readily occur on heating.

In addition, it can be analogously inferred that since the metallic phase existing on the grain boundary in a small amount is an intermetallic compound of metals composing the reaction vessel and catalysis metals contained in diamond used as a raw material, and the difference thereof from diamond in thermal expansion coefficient is small in comparison that of metals or alloys thereof acting as a catalyst thermal stress, which is generated in a sintered body by heating, is reduced.

Thus it seems that in a sintered body according to the present invention the contact surface area of the metallic phase and diamond is relatively small and the graphitization of crystals at the grain boundary on heating does not easily occur whereby heat-resistance is remarkably improved.

Thus, the present invention has made possible the production of a diamond sintered body remarkably improved in heat-resistance.

In addition, when synthetic diamond containing added boron to form solid solutions is used as a raw material, at the same time, the sintered body does not lose its electrical conductivity even if only a small amount of metal is contained, as described above, whereby it has the advantage of being susceptible to electrical discharge machining.

One reason why the content of catalysis metals or alloys containing them in the synthetic diamond is limited to a range of 0.01 to 10% by weight is that sintering is difficult to carry out with any combination of degree of graphitization and sintering conditions selected for the experiments in a range smaller than 0.01% by weight while the heat-resistance of a sintered body is undesirably reduced in a range larger than 10% by weight.

In addition, as to the content of boron contained in the diamond used as a raw material, the addition of boron at a ratio smaller than 0.001% by weight is not desirable since the electrical conductivity of the sintered body becomes lower, whereby it becomes difficult to apply electric discharge machining to the sintered body. The addition of boron at a ratio larger than 1.0% by weight is not desirable since the abrasion-resistance of a sintered body is reduced.

The graphitization of the starting material is necessary for the improvement of sintering properties and is preferably carried out by heating diamond powders at temperatures of 1,400°C or higher in a vacuum or a non-oxidizing atmosphere.

Then, the raw materials, all or part of which are graphitized, are charged in a reaction vessel made of at least one metal selected from a group consisting of Ti, Zr, Hf, V, Nb, Ta, Cr, Mo, W and the like or in a reaction vessel which does not contain the above described metals and does not chemically react with the raw materials, and sealed by electric beam welding or the like in a high vacuum at a pressure of $5 \times 10^{-4}$ Torr (0.065 Pa) or less. A pressure higher than $5 \times 10^{-4}$ (0.065 Pa) Torr is not desirable since the sintering properties deteriorate under the influence of gas absorbed onto the raw material.

Furthermore, sintering is preferably carried out in a superhigh pressure apparatus such as a belt type superhigh pressure apparatus at pressures of 50kb or more and temperatures of 1,400°C or more, under which condition diamond is stable, and more preferably at a pressure of 70kb or more and a temperature of 1,600°C or more.

After the completion of the sintering process black lumps of diamond can be obtained by dissolving the recovered capsule in heated hydrochloric acid.

The resulting sintered body typically has a specific resistance of $10^3$ to 0.1 ohm.cm and is capable of being subjected to electric discharge machining similar to that applied to a conventional diamond sintered body containing Co as a bonding material.

The present invention will be described below in detail with reference to the following examples:

## Example 1

Synthetic diamond powders having a mean particle size of 25 microns and containing metallic impurities as shown in the following table 1 were used as the starting material:

# EP 0 155 066 B1

## Table 1

(Unit ppm)

| Powder No.. Contained metal | A | B | C | D |
|---|---|---|---|---|
| Fe | 600 | 1,600 | 4,700 | 1,500 |
| Ni | 79,400 | 11,900 | 2,700 | - |
| Co | - | - | - | 2,300 |
| Cr | 4,300 | 500 | 100 | - |
| Mn | 300 | 100 | 700 | - |
| Ta | 200 | 500 | - | - |
| Total | 84,800 | 14,600 | 8,200 | 3,800 |

Numerical values in Table 1 are the contents of metals contained in diamond powders analyzed by means of a mass spectrometer.

Each of the above described diamond powders is held in a vacuum furnace at 1,400°C for 1 hour. The diamond powders are taken out of the vacuum furnace and then tested for percentage graphitization by means of an X-ray diffraction method. The percentage graphitization was about 90 wt.%, 50 wt.%, 30 wt.% and 20 wt.% for A, B, C and D respectively.

These powders are each put into a vessel made of Ta and then the vessel is sealed hermetically. Subsequently, the vessel is held at a pressure of 50 kb ($5.10^9$ Pa) and a temperature of 1,400°C for 5 minutes in a belt type superhigh pressure apparatus to sinter the powders.

As a result, a sintered body could be recovered except in the case of the powder D. In the case of the powder D, a satisfactory sintered body could not be obtained.

An X-ray diffraction of the resulting sintered body did not show the existence of graphite remaining in the case of the powders A, B. Only a small amount of graphite was found to remain in the case of the powder C.

Then a cutting tip is produced from a sintered body obtained from the powders A, B. The performance was evaluated by cutting an alumina sintered body having a Vickers hardness of 2,000.

The abrasion width of a flank of a tool is shown in Table 2 with a sintered body containing Co at a ratio of about 10% on the market as the reference material.

In this time, cutting was carried out under the following conditions:

```
Cutting speed:   50 m/min
Depth of cut:    0.5 mm
Feed:            0.05 mm/rpm
Cutting time:    15 minutes (dry cutting)
```

## Table 2

| | Abrasion width of a flank (mm) |
|---|---|
| A | 0.35 |
| B | 0.20 |
| Reference material | 0.50 |

## Example 2

Experiments were carried out under various kinds of sintering condition as shown in Table 3 using the powder A used in Example 1.

### Table 3

| No. | Pressure (Kb) | Temperature (°C) | Sintered state |
|---|---|---|---|
| 1 | 45 | 1350 | Graphite remained |
| 2 | 55 | 1450 | Good |
| 3 | 60 | 1700 | " |
| 4 | 70 | 1900 | " |
| 5 | 55 | 1800 | Graphite remained |

It is thought from Table 3 that the remaining of graphite in the experiments No. 1 is due to insufficient pressure as well as temperature and the remaining of graphite in the experiment No. 5 is due to too high temperature which is out of a range wherein diamond is stable.

Subsequently, the heating tests were carried out on sintered bodies of No. 2 to No. 4. Every sintered body did not show any change in external appearance and specific gravity even after heating at 1,000°C for 30 minutes.

## Example 3

Various kinds of diamond powder having a mean particle size of 30 microns and containing metallic impurities as shown in the following table 4 were used as raw materials:

### Table 4

(Unit ppm)

| Powder<br>Contained metal | E | F | G | H |
|---|---|---|---|---|
| Fe | 4,500 | 800 | 400 | – |
| Co | – | 3,500 | 300 | 40 |
| Ni | 7,300 | 400 | 800 | 30 |
| Cr | 20 | 50 | 100 | – |
| Mn | 30 | – | – | – |
| Ta | – | 10 | – | 10 |
| Total | 11,850 | 4,760 | 1,600 | 80 |

Numerical values in the above described Table 4 are the contents of metals contained in diamond powders analyzed by means of a mass spectrometer.

Each of the above described powders was treated in vacuum at 1,500°C for 1 hour. The diamond powders were taken out and then tested for percentage graphitization by means of an X-ray diffraction method. The degree of graphitization was about 90 wt.%, 50 wt.%, 8 wt.% and 0.3 wt.% for E.F.G. and H respectively.

These powders were put into a reaction vessel made of Ti and then the reaction vessel was sealed hermetically under a high vacuum of $5 \times 10^{-6}$ Torr (6,5.10$^{-4}$ Pa).

For the comparison, natural diamond not containing the metals shown in Table 4 was put into a similar reaction vessel. These samples were sintered by holding in a belt type high pressure apparatus at a pressure of 70 kb (7.10$^9$ Pa) and a temperature of 1,800°C for 10 minutes.

As a result, in the cases of the powder H and natural diamond, the sintering property was bad and the resulting sintered body was cracked.

An X-ray diffraction of the resulting sintered body showed that graphite did not remain in the cases of powders E, F and G but a small amount of graphite remained in the cases of powder H and natural diamond.

Inside the sintered bodies of E, F and G, were formed intermetallic compounds consisting of the iron group metal and Ti from the vessel.

Then a cutting tip was produced from a sintered body obtained from the powders E, F and G. Their performance was evaluated by cutting an alumina sintered body having a Vickers hardness of 2,000.

The abrasion width of a flank of a tool is shown in Table 5 with a sintered body containing Co at a ratio of about 10% on the market as the reference material.

The cutting test was carried out under the same conditions as in Example 1.

## Table 5

| Sintered body | Abrasion width of a flank (mm) |
|---|---|
| Sintered body using the powder E therein | 0.16 |
| Sintered body using the powder F therein | 0.12 |
| Sintered body using the powder G therein | 0.10 |
| Reference material | 0.53 |

### Example 4

The powder G shown in Table 4 was filled in a reaction vessel made of V and sintered by holding under the conditions as shown in Table 6 for 5 minutes. Also the characteristics of the resulting sintered bodies are shown in Table 6.

Table 6

| No. | Pressure (Kb) | Tempera-ture ($^\circ$C) | Sintered state | Vickers hardness (kg/mm$^2$) |
|---|---|---|---|---|
| 1 | 43 | 1300 | Graphite remained | 6000 |
| 2 | 75 | 1900 | Good | 12000 |
| 3 | 65 | 1700 | " | 11500 |
| 4 | 53 | 1800 | Graphite remained | 7500 |
| 5 | 90 | 2000 | Good | 13000 |
| 6 | 67 | 1650 | " | 11800 |

It is thought from the results as shown in the above described Table 6 that the remaining of graphite in the experiment No. 1 is due to insufficient pressure as well as temperature and the remaining of graphite in the experiment No. 4 is due to too high temperature which is out of a range wherein diamond is stable.

Then, the heating tests were carried out on sintered bodies of Nos. 2, 3, 5 and 6 which did not show the existence of graphite remaining and showed a good sintered state. Every sintered body did not show any change in external appearance, hardness and specific gravity even after heating at 1,000°C for 30 minutes.

Example 5

Various kinds of diamond powder having a mean particle size of 30 microns and containing metallic impurities as shown in the following Table 7 were used as the raw materials:

Table 7

(Unit: weight %)

| Contained metal / Powder | | I | J | K | L | M |
|---|---|---|---|---|---|---|
| Catalysis metal | Fe | 0.3 | 0.2 | 0.4 | 0.5 | 0.001 |
| | Co | 2.0 | 1.0 | 0.3 | 0.2 | 0.003 |
| | Ni | 1.3 | 0.2 | - | 0.1 | 0.001 |
| | Cr | 0.1 | 0.3 | 0.2 | 0.3 | - |
| | Mn | 0.2 | - | 0.2 | - | - |
| | Ta | - | 0.1 | - | 0.2 | - |
| | B | 0.01 | 0.8 | 0.02 | - | - |
| Total of catalysis metals | | 3.9 | 1.8 | 1.1 | 1.3 | 0.005 |

8

Numerical values in the above described Table 7 are the contents of metals contained in diamond powders analyzed by means of a mass spectrometer.

Each of the above described powders was held at 1,450°C for 1 hour in a vacuum furnace. The powders were taken out of the vacuum furnace and then tested on partially graphitized percent by means of an X-ray diffraction method. The partially graphitized percent was about 90 wt.%, 50 wt.%, 30 wt.%, 35 wt.% and 2 wt.% for I, J, K, L and M, respectively.

These powders were filled in a reaction vessel made of Nb and then the reaction vessel was sealed hermetically under a high vacuum of $5 \times 10^{-6}$ Torr (6,5.10$^{-4}$ Pa). For the comparison, also natural diamond without containing metals as shown in Table 7 was filled in the reaction vessel without graphitizing alike. These samples were sintered by holding at a pressure of 70 kb and a temperature of 1,800°C in a belt type high pressure apparatus.

As a result, sintered bodies resulting from the powder M and natural diamond showed a bad sintering property and were cracked. An X-ray diffraction of the resulting sintered body taught that graphite did not remain in the cases of powders I, J, K and L but a small amount of graphite remained in the cases of the powder M and natural diamond.

Sintered bodies obtained from the powders I, J, K and L have specific resistance as shown in Table 8. Accordingly, the application of an electric discharge machining was possible in all cases other than that of the powder L.

Table 8

| Sintered body | Specific resistance (ohm ·cm) |
|---|---|
| I | $1.1 \times 10^2$ |
| J | 0.15 |
| K | 1.0 |
| L | $8 \times 10^5$ |

A cutting tip was produced from sintered bodies I, J and K by means of an electric discharge machining and its performance was evaluated by cutting an alumina sintered body having a Vickers hardness of 2,000.

An abrasion width of a flank of a tool in the cutting tests is shown in Table 9 with showing a sintered body containing Co at a ratio of about 10% on the market as a reference material.

Table 9

| Sintered body | Abrasion width of a flank (mm) |
|---|---|
| I | 0.28 |
| J | 0.25 |
| K | 0.12 |
| Reference material | 0.53 |

The sintered body I is inferior in heat-resistance due to the higher content of catalysis metals and the sintered body J is inferior in abrasion-resistance due to the larger content of boron. The sintered body K is remarkably improved in heat-resistance and abrasion-resistance without reducing an electrical conductivity due to an optimum content of impurities in the raw material.

Example 6

Synthetic diamond powders having a mean particle size of 25 microns and containing metallic impurities as shown in the following Table 10 was used as the starting raw material.

9

Table 10

| Contained metal | Fe | Ni | Co | Cr | Mn | Ta | Total |
|---|---|---|---|---|---|---|---|
| Content (ppm) | 20 | 150 | 120 | 10 | 5 | 5 | 310 |

These powders were used as raw materials for producing sintered bodies after graphitizing a part thereof under various kinds of condition.

The graphitizing conditions of raw materials as well as the graphitized percent evaluated by means of an X-ray diffraction method are shown in Table 11.

Table 11

| Item / Powder No. | Graphitizing condition | | | Partially graphitized percent (%) |
|---|---|---|---|---|
| | Atmosphere | Temperature (°C) | Time (min) | |
| a | Vacuum | 1500 | 30 | 12 |
| b | Vacuum | 1250 | 60 | 0 |
| c | Argon | 1800 | 40 | 70 |
| d | Vacuum | 1600 | 90 | 40 |
| e | Nitrogen | 1700 | 10 | 40 |

Subsequently, the graphitized raw materials were sintered at various pressures and temperatures.

As a result, it was made clear that the graphitized raw materials could be sintered under the conditions defined by V-letter ranges as shown by C—C′, D—D′ and E—E′ in the attached figure in accordance with graphitized percentage.

All of the resulting sintered bodies are strong and have a Vickers hardness of 13,000 kg/mm$^2$, and they did not show any change in shape even after heating at 1,100°C in vacuum.

Synthetic diamond powders having a mean particle size of 50 microns and containing metallic impurities as shown in the following table 12 were used as the starting raw materials.

Table 12

(Unit: ppm)

| Contained metal / Powder No. | Fe | Ni | Co | Cr | Mn | Ta | Total |
|---|---|---|---|---|---|---|---|
| f | 300 | 50 | 200 | 0 | 10 | 20 | 580 |
| g | 200 | 1200 | 800 | 40 | 100 | 20 | 2360 |
| h | 100 | 40 | 20 | 20 | 5 | 5 | 190 |
| i | 20 | 10 | 20 | 0 | 5 | 0 | 55 |

Numerical values in the above described table 12 are the contents of metals in diamond powders analysed by means of a mass spectrometer.

Each of the above described powders was held at 1,500°C for 30 minutes in a vacuum furnace. The powders were taken out of the vacuum furnace and then tested on partially graphitized percent by means of an X-ray diffraction method. The partially graphitized percent was about 15 wt.%, 25 wt.%, 10 wt.% and 5 wt.% for the powder f, g, h and i, respectively.

These resulting powders were filled in a vessel made of Ta and then sintered by holding at a pressure of 85 kb and a temperature of 1,700°C for 5 minutes in a belt type superhigh pressure apparatus.

As a result, sintered bodies could be recovered in the cases other than that of the powder i. In the case of the powder i, a satisfactory sintered body could not be obtained.

An X-ray diffraction of the resulting sintered bodies taught that graphite did not remain in the cases of the powders f, g and h but a small amount of graphite remained in the case of the powder i.

Subsequently, a cutting tip was produced from the resulting sintered bodies obtained from the powders f, g and h and then its performance was evaluated by cutting an alumina sintered body having a Vickers hardness of 2,000.

An abrasion width of a flank of a tool is shown in Table 13 with showing a sintered body containing Co at a ratio of about 10% on the market as a reference material. The cutting tests were carried out under the same cutting conditions as in Example 1.

## Table 13

| Sintered body | Abrasion width of a flank (mm) |
|---|---|
| f | 0.09 |
| g | 0.13 |
| h | 0.08 |
| Reference material | 0.52 |

A hard diamond sintered body according to the present invention has the superior heat-resistance and abrasion-resistance required for the materials of tools such as cutting tools, excavating tools, wire drawing dies and dressers. In particular, the heat-resistance, the lack of which has been a defect of conventional diamond sintered bodies, is remarkably improved without reducing the strength and while retaining an electrical conductivity equivalent to that of a sintered body containing Co as a bonding material. Accordingly, its range of use as a material for tools can be remarkably expanded and the performance of tools can be remarkably improved.

**Claims**

1. A hard diamond sintered body comprising mutually bonded diamond particles, at least one diamond synthesising catalyst metal $M_A$ selected from Fe, Co, Ni, Cr, Mn and Ta or an alloy thereof being incorporated within said particles in an amount of 0.01 to 10 wt.% based on the particles, and an intermetallic compound in the grain boundary between said particles, the intermetallic compound containing at least one said metal $M_A$ and a different metal which may be another Metal $M_A$ or a Metal $M_B$ selected from Ti, Zr, Hf, V, Nb, Mo, W, Cr and Ta, and being present in an amount of 0.01 to 12 wt.% based on the sintered body, the sintered body being made by:

wholly or partly graphitizing a synthetic diamond powder containing said metal $M_A$ and

sintering the graphitized powder thus produced at a temperature and pressure at which diamond is stable, optionally in the presence of a metal $M_B$.

2. A conductive hard diamond sintered body comprising mutually bonded diamond particles, at least one diamond-synthesizing catalyst metal $M_A$ selected from Fe, Co, Ni, Cr, Mn and Ta or an alloy thereof being incorporated within said particles in an amount of 0.01 to 3.0 wt.% based on the particles and boron being incorporated within said particles in an amount of 0.001 to 1.0 wt.% based on the particles, and an intermetallic compound in the grain boundary between said particles, the intermetallic compound containing at least one said metal $M_A$, boron or an alloy thereof and a different metal which may be another metal $M_A$ or a metal $M_B$ selected from Ti, Zr, Hf, V, Nb, Mo, W, Cr and Ta, and being present in an amount of 0.01 to 12 wt.% based on the sintered body, the sintered body having a specific resistance of 0.1 to $10^3$ ohm.cm and being made by:

wholly or partly graphitizing a synthetic diamond powder containing a metal $M_A$ and boron and

sintering the graphitized powder thus produced at a superhigh pressure and elevated temperature at which diamond is stable optionally in the presence of a metal $M_B$.

3. A process for producing a hard diamond sintered body as claimed in claim 1 which comprises subjecting a synthetic diamond powder having dispersed therein 0.01 to 10 wt.%, based on the total powder, of at least one diamond-synthesizing catalyst Metal $M_A$ selected from Fe, Co, Ni, Cr, Mn, Ta and alloys thereof to an elevated temperature under conditions in which diamond is unstable to graphitize all or part of the diamond, and

sintering the powder thus obtained optionally in the presence of a further metal $M_B$ selected from Ti, Zr, Hf, V, Nb, Mo, W, Cr and Ta, at least two said metals $M_A$, $M_B$ being present in the grain boundary between said particles and the sintering being carried out at elevated temperature and pressure whereby the graphite is reconverted to diamond while said metal $M_A$ and optionally $M_B$ forms an intermetallic compound and is prevented from infiltrating into said particles from the grain boundary by the metal $M_A$ already dispersed therein.

4. A process for producing a conductive hard diamond sintered body as claimed in claim 2 which comprises subjecting a synthetic diamond powder having dispersed therein 0.001 to 1.0 wt.% of boron and 0.01 to 3.0 wt.% of one or more diamond-synthesizing catalyst metals $M_A$ selected from Fe, Co, Ni, Cr, Mn, Ta and alloys thereof, said percentages being based on the total powder, to an elevated temperature under conditions in which diamond is unstable to graphitize all or part of the diamond and

sintering the powder thus obtained optionally in the presence of a further metal $M_B$ selected from Ti, Zr, Hf, V, Nb, Mo, W, Cr and Ta, at least two elements selected from $M_A$, $M_B$ and boron being present in the grain boundary between said particles and the sintering being carried out at elevated temperature and pressure whereby the graphite is reconverted to diamond while said metal $M_A$, boron and/or $M_B$ form an intermetallic compound in the grain boundary and are prevented from infiltrating into said particles by the metal $M_A$ and boron already dispersed therein.

5. A process according to claim 3 or claim 4 wherein the sintering is carried out in a vessel made from one or more of said metals $M_B$ which diffuse into the grain boundary during the sintering process.

6. A process according to any one of claims 3 to 5 wherein the graphitization is carried out at a temperature of 1400°C or more in a vacuum or a non-oxidizing atmosphere.

7. A process according to any one of claims 3 to 6 wherein the graphitized powder to be sintered is sealed into a reaction vessel under a pressure of $5 \times 10^{-4}$ Torr (0.065 Pa) or less.

8. A process according to any one of claims 3 to 7 wherein the sintering is carried out at a pressure of at least 50 kb and a temperature of at least 1400°C.

9. A process according to claim 8 wherein the sintering is carried out at a pressure of at least 70 kb $(7 \times 10^9$ Pa) and a temperature of 1600°C or more.

**Patentansprüche**

1. Gesinterter Diamantkörper, bestehend aus miteinander verbundenen Diamantpartikeln, wenigstens einem Diamant synthetisierenden Katalysatormetall $M_A$ aus Fe, Co, Ni, Cr, Mn oder Ta oder einer Legierung daraus, das unter die genannten Partikel in einer Menge von 0,01 bis 10 Gew.% bezogen auf die Partikel beigemengt ist, und einer intermetallischen Verbindung an der Korngrenze zwischen den genannten Partikeln, wobei die intermetallische Verbindung wenigstens eines der genannten Metalle $M_A$ und ein davon verschiedenes Metall beinhaltet, welches ein anderes Metall $M_A$ oder ein Metall $M_B$ aus Ti, Zr, Hf, V, Nb, Mo, W, Cr oder Ta sein kann und in einer Menge von 0,01 bis 12 Gew.% bezogen auf den gesinterten Körper vorhanden ist, wobei der gesinterte Körper wie folgt hergestellt wird:

ganz oder teilweises Graphitisieren eines synthetischen Diamant-Pulvers, welches das Metall $M_A$ enthält, und Sintern des so hergestellten graphitisierten Pulvers bei einer Temperatur und einem Druck, bei denen Diamant stabil ist, optional im Beisein eines Metalls $M_B$.

2. Leitfähiger gesinterter Diamantkörper, bestehend aus miteinander verbundenen Diamantpartikeln, wenigstens einem Diamant synthetisierenden Katalysatormetall $M_A$ aus Fe, Co, Ni, Cr, Mn oder Ta oder einer Legierung daraus, das unter die genannten Partikel in einer Menge von 0,10 bis 3,0 Gew.%, bezogen auf die Partikel, beigemengt ist, wobei unter die Partikel auch Bor in einer Menge von 0,001 bis 1 Gew.% bezogen auf die Partikel gemischt ist, und aus einer intermetallischen Verbindung an der Korngrenze zwischen den genannten Partikeln, wobei die intermetallische Verbindung wenigstens eines der genannten Metalle $M_A$, Bor oder eine Legierung daraus und ein davon verschiedenes Metall beinhaltet, welches ein anderes Metall $M_A$ oder ein Metall aus Ti, Zr, Hf, V, Nb, Mo, W, Cr oder Ta sein kann und in einer Menge von 0,01 bis 12 Gew.% bezogen auf den gesinterten Körper vorhanden ist, wobei der gesinterte Körper einen spezifischen Widerstand von 0,1 bis $10^3$ Ohm.cm aufweist und hergestellt wird durch:

ganz oder teilweises Graphitisieren eines synthetischen Diamant-Pulvers, welches das Metall $M_A$ und Bor enthält, und

Sintern des so hergestellten Pulvers bei einem suprahohen Druck und erhöhter Temperatur, bei denen Diamant stabil ist, optional im Beisein eines Metalls $M_B$.

3. Verfahren zur Herstellung eines gesinterten Diamantkörpers nach Anspruch 1, das sich zusammensetzt aus den Verfahrensschritten:

Aussetzen eines synthetischen Diamantpulvers, in dem 0,01 bis 10 Gew.%, bezogen auf das ganze Pulver, wenigstens eines diamantsynthetisierenden Katalysatormetalls $M_A$ aus Fe, Co, Ni, Cr, Mn, Ta oder Legierungen daraus verteilt ist, einer erhöhten Temperatur unter Bedingungen, bei denen Diamant instabil

## EP 0 155 066 B1

ist, um den Diamanten ganz oder teilweise zu graphitisieren, und

Sintern des so erhaltenen Pulvers, optional im Beisein eines weiteren Metalls $M_B$ aus Ti, Zr, Hf, V, Nb, Mo, W, Cr oder Ta, wobei wenigstens zwei der genannten Metalle $M_A$, $M_B$ an der Korngrenze zwischen den genannten Partikeln vorhanden sind und das Sintern bei einer erhöhten Temperatur und einem erhöhten Druck ausgeführt wird, wobei das Graphit in Diamant zurückverwandelt wird, während das genannte Metall $M_A$ und optional $M_B$ eine intermetallische Verbindung bildet und von einem Eindringen in diegenannten Partikel von der Korngrenze durch das bereits dort hinein dispergierte Metall $M_A$ abgehalten wird.

4. Verfahren zur Herstellung eines leitfähigen gesinterten Diamantkörpers nach Anspruch 2, das sich zusammensetzt aud den Verfahrensschritten:

Aussetzen eines synthetischen Diamantpulvers, in dem 0,001 bis 1.0 Gew.% Bor und 0,01 bis 3 Gew.% eines oder mehrerer diamant-synthetisierenden Katalysatormetalle $M_A$ aus Fe, Co, Ni, Cr, Mn, Ta oder Legierungen daraus verteilt sind, wobei die Prozentangaben jeweils auf das ganze Pulver bezogen sind, einer erhöhten Temperatur unter Bedingungen, bei denen Diamant instabil ist, um den Diamanten ganz oder teilweise zu graphitisieren, und

Sintern des so erhaltenen Pulvers, optional im Beisein eines weiteren Metalls $M_B$ aus Ti, Zr, Hf, Nb, Mo, W, Cr und Ta, wobei wenigstens zwei Elemente aus $M_A$, $M_B$ und Bor an der Korngrenze zwischen den genannten Partikeln vorhanden sind und das Sintern bei einer erhöhten Temperatur und bei einem erhöhten Druck ausgeführt wird, wobei das Graphit in Diamant zurückverwandelt wird, während das Metall $M_A$, Bor und/oder $M_B$ eine intermetallische Verbindung an der Korngrenze bilden und von einem Eindringen in die genannten Partikel durch bereits dort hinein dispergiertes Metall $M_A$ und Bor abgehalten werden.

5. Verfahren nach Anspruch 3 oder 4, bei dem das Sintern in einem Behälter aus einem oder mehreren genannten Metallen $M_B$, die während des Sintervorganges in die Korngrenze diffundieren, ausgeführt wird.

6. Verfahren nach einem der Ansprüche 3 bis 5, bei dem die Graphitisation bei einer Temperatur von 1400°C oder mehr in einem Vakuum oder einer nicht-oxidierenden Atmosphäre stattfindet.

7. Verfahren nach einem der Ansprüche 3 bis 6, bei dem das graphitisierte, zu sinternde Pulver in einem Reaktionsbehälter unter einem Druck von $5 \cdot 10^{-4}$ Torr (0,065 Pa) oder weniger eingeschlossen wird.

8. Verfahren nach einem der Ansprüche 3 bis 7, bei dem das Sintern bei einem Druck von wenigstens 50 Kb und bei einer Temperatur von wenigstens 1400°C stattfindet.

9. Verfahren nach Anspruch 8, bei dem das Sintern bei einem Druck von wenigstens 70 Kb ($7 \cdot 10^9$ Pa) und einer Temperatur von 1600°C oder mehr stattfindet.

**Revendications**

1. Corps dur en diamant fritté comprenant des particules de diamant mutuellement soudées, au moins un métal $M_A$ catalyseur de la synthèse du diamant et choisi parmi Fe, Co, Ni, Cr, Mn et Ta et un alliage de ceux-ci étant incorporé dans les particules en une quantité de 0,01 à 10% en poids, sur la base des particules, et un composé intermétallique dans le joint de grain entre les particules, le composé intermétallique contenant au moins le métal $M_A$ et un métal différent qui peut être un autre métal $M_A$ ou un métal $M_B$ choisi parmi Ti, Zr, Hf, V, Nb, Mo, W, Cr et Ta, et étant présent en une quantité de 0,01 à 12% en poids, sur la base du corps fritté, le corps fritté étant obtenu:

en graphitisant pour tout ou partie une poudre de diamant synthétique contenant ce métal $M_A$, et

en frittant la poudre graphitisée ainsi obtenue à une température et une pression auxquelles le diamant est stable, facultativement en présence d'un métal $M_B$.

2. Corps conducteur dur en diamant fritté comprenant des particules de diamant mutuellement soudées, au moins un métal $M_A$ catalyseur de la synthèse du diamant et choisi parmi Fe, Co, Ni, Cr, Mn et Ta et un alliage de ceux-ci etant incorporé dans les particules en une quantité de 0,01 à 3,0% en poids, sur la base des particules, et du bore étant incorporé dans les particules en une quantité de 0,001 à 1,0% en poids, sur la base des particules, et un composé intermétallique dans le joint de grain entre les particules, le composé intermétallique contenant au moins le métal $M_A$, du bore ou un alliage de celui-ci et un métal différent qui peut être un autre métal $M_A$ ou un métal $M_B$ choisi parmi Ti, Zr, Hf, V, Nb, Mo, W, Cr et Ta, et étant présent en une quantité de 0,01 à 12% en poids, sur la base du corps fritté, le corps fritté ayant une résistance spécifique de 0,1 à $10^3$ ohms.cm et étant obtenu:

en graphitisant pour tout ou partie une poudre de diamant synthétique contenant un métal $M_A$ et du bore, et

en frittant la poudre graphitisée ainsi obtenue sous une superhaute pression à une température élevée auxquelles le diamant est stable, facultativement en présence d'un métal $M_B$.

3. Procédé de fabrication d'un corps dur en diamant fritté suivant la revendication 1, qui comprend les actions:

de soumettre une poudre de diamant synthétique contenant en dispersion 0,01 à 10% en poids, sur la base de la poudre totale, d'au moins un métal $M_A$ catalyseur de la synthèse du diamant et choisi parmi Fe, Co, Ni, Cr, Mn, Ta et les alliages de ceux-ci à une température élevée dans des conditions dans lesquelles le diamant est instable pour graphitiser tout ou partie du diamant, et

de fritter la poudre ainsi obtenue, facultativement en présence d'un autre métal $M_B$ choisi parmi Ti, Zr, Hf, V, Nb, Mo, W, Cr et Ta, au moins les deux métaux $M_A$ et $M_B$ étant présents dans le joint de grain entre les particules, et le frittage étant exécuté à une température et une pression élevées auxquelles le graphite est reconverti en diamant, tandis que le métal $M_A$ et facultativement le métal $M_B$ forment un composé intermétallique et sont empêchés de s'infiltrer dans les particules à partir du joint de grain par le métal $M_A$ qui y est déjà dispersé.

4. Procédé de fabrication d'un corps conducteur dur en diamant fritté suivant la revendication 2, qui comprend les actions:

de soumettre une poudre de diamant synthétique contenant en dispersion 0,001 à 1,0% en poids de bore et 0,01 à 3,0% en poids d'un ou plusieurs métaux $M_A$ catalyseurs de la synthèse du diamant et choisis parmi Fe, Co, Ni, Cr, Mn, Ta et les alliages de ceux-ci, les pourcentages étant basés sur la poudre totale, à une température élevée dans des conditions dans lesquelles le diamant est instable, pour graphitiser tout ou partie du diamant, et

de fritter la poudre ainsi obtenue, facultativement en présence d'un autre métal $M_B$ choisi parmi Ti, Zr, Hf, V, Nb, Mo, W, Cr et Ta, au moins deux éléments choisis entre $M_A$, $M_B$ et le bore étant présents dans le joint de grain entre les particules, et le frittage étant exécuté à une température et une pression élevées auxquelles le graphite est reconverti en diamant, tandis que le métal $M_A$, le bore et/ou le métal $M_B$ forment un composé intermétallique dans le joint de grain et sont empêchés de s'infiltrer dans les particules par le métal $M_A$ et le bore qui y sont déjà dispersés.

5. Procédé suivant la revendication 3 ou 4, dans lequel le frittage est exécuté dans un récipient fait d'un ou plusieurs des métaux $M_B$ qui diffusent dans le joint de grain pendant le processus de frittage.

6. Procédé suivant l'une quelconque des revendications 3 à 5, dans lequel la graphitisation est exécutée à une température de 1400°C ou davantage sous vide ou en atmosphère non oxydante.

7. Procédé suivant l'une quelconque des revendications 3 à 6, dans lequel la poudre graphitisée à fritter est scellée dans un récipient de réaction sous une pression de $5 \times 10^{-4}$ torr (0,065 Pa) sinon moins.

8. Procédé suivant l'une quelconque des revendications 3 à 7, dans lequel le frittage est exécuté sous une pression d'au moins 50 kbar ($5 \times 10^9$ Pa) et à une température d'au moins 1400°C.

9. Procédé suivant la revendication 8, dans lequel le frittage est exécuté sous une pression d'au moins 70 kbar ($7 \times 10^9$ Pa) et à une température de 1600°C ou davantage.